# EUROPEAN PATENT SPECIFICATION

(11) **EP 4 144 588 B1**
(45) Date of publication and mention of the grant of the patent: **18.06.2025**
(21) Application number: 20933713.8
(22) Date of filing: 15.12.2020
(51) Int. Cl.: B60R 9/055, B60R 11/00

(54) **CONTACT-TYPE VEHICLE ROOF BOX**
KONTAKTFAHRZEUGDACHKASTEN
COFFRE DE TOIT DE VÉHICULE DU TYPE À CONTACT

(30) Priority: 29.04.2020 KR 20200052273
(43) Date of publication of application: 08.03.2023
(73) Proprietor: Kim, Rin, Jeollabuk-do 54828 (KR)
(72) Inventor: Kim, Rin, Jeollabuk-do 54828 (KR)
(74) Representative: ABG Intellectual Property Law, S.L.
(86) International application number: PCT/KR2020/018317
(87) International publication number: WO 2021/221264

(56) References cited:
- WO-A1-2017/026695
- KR-B1- 101 974 726
- KR-U- 20180 001 983
- KR-Y1- 200 488 059
- US-A1- 2005 045 679

## Description

### [Technical Field]

The present invention relates to a contact-type vehicle roof box installed on a vehicle roof while being in close contact with the vehicle roof that may be applied regardless of the type of vehicle.

### [Background Art]

In general, an interior of a vehicle and a space in a trunk are narrow. Therefore, a roof box having a separate accommodation space is widely used when a user travels long distances or carries items by using the vehicle. The roof box may be mounted on a roof panel and configured to carry the items. A rack or carrier is used as a fixing means for fixedly mounting the roof box on the roof panel of the vehicle.

The roof box is made of plastic or polycarbonate basically having a waterproof function. Because the roof box made of plastic or polycarbonate always has a predetermined shape, the roof box made of plastic or polycarbonate is suitable for easily accommodating items and maintaining an external shape thereof.

Meanwhile, the roof box affects a vehicle height in a structure such as an underground parking lot or a mart that limits the vehicle to a certain height. Therefore, a contact-type roof box is newly manufactured and released to the market. However, the contact-type roof box is designed to conform to the corresponding vehicle to manufacture the contact-type roof box. A large amount of cost is required to manufacture and develop a mold used for only one vehicle. In addition, the roof box purchased with a large amount of money cannot be mounted on a newly purchased vehicle after the previous vehicle is sold, which often causes an economic loss. Because a multitype roof box is mounted by means of a general horizontal bar, the multitype roof box may be mounted regardless of the shape and type of vehicle. However, secondary discomfort, such as wind noise, is caused by a high vehicle height and separation between the vehicle and the multitype roof box.

KR20180001983U discloses an installation structure of a vehicle roof rack installed for loading a load on the roof of a vehicle. The installation structure comprises two L-shaped brackets provided with circular holes for securing in a fixed position the load on the roof of the vehicle by means of bolts and nuts.

### [Disclosure]

### [Technical Problem]

The present invention has been made in an effort to solve the above-mentioned problems, and an object of the present invention is to provide a contact-type vehicle roof box that may be mounted on a vehicle roof panel while being in close contact with the vehicle roof panel regardless of the type of vehicle.

### [Technical Solution]

The present invention provides a contact-type vehicle roof box, which is configured to be mounted on a roof of a vehicle, the roof box including: an elastic pad configured as a plate-shaped elastic member having a shape corresponding to a bottom of the roof box, the elastic pad configured to be seated on an upper surface of a roof panel of the vehicle; a roof box body seated on the elastic pad and having two or more coupling grooves formed through two opposite surfaces of the roof box body and extending in a vertical direction; and L-shaped connection brackets each having an L-shaped frame including a vertical-side body and a horizontal-side body, in which a plurality of second coupling grooves each having a width corresponding to a width of the first coupling groove is formed in the vertical-side body and provided horizontally with respect to the horizontal-side body, a plurality of third coupling grooves is formed in the horizontal-side body and provided vertically with respect to the vertical-side body, the vertical-side body is connected to a position of the coupling groove of the roof box body, and the horizontal-side body is coupled to the roof of the vehicle.

According to the embodiment of the present invention, a roof rail is mounted on the roof of the vehicle, in which the contact-type vehicle roof box may further include a first binding bracket including a [-shaped inner body and an inverted [-shaped outer body that are coupled while facing openings thereof and holding a rail head portion of the roof rail, and the first binding bracket and the horizontal-side body of the L-shaped connection bracket may be coupled by bolting.

The [-shaped inner body may include: a first upper horizontal frame; a first lower horizontal frame; and a first vertical frame configured to connect an end of the first upper horizontal frame and an end of the first lower horizontal frame, a bolt rod B having a screw thread may penetrate the first upper horizontal frame upward and protrudes upward, a first bolt hole may be formed through a surface of the first upper horizontal frame that faces the outer body, and the inverted [-shaped outer body may include: a second upper horizontal frame and a second lower horizontal frame corresponding to the [-shaped inner body; and a second vertical frame configured to connect an end of the second upper horizontal frame and an end of the second lower horizontal frame. A second bolt hole may be disposed at an upper end of the second vertical frame, formed through the second upper horizontal frame, and provided at a position corresponding to the first bolt hole, and the bolt rod B of the [-shaped inner body may be inserted into and bolt-coupled to the third coupling groove of the horizontal-side body, such that the first binding bracket and the connection bracket are fixedly coupled.

According to another embodiment of the present invention, a roof rack bar may be mounted on the roof of the vehicle, the contact-type vehicle roof box may further include a second binding bracket having a [ shape and including horizontal frames between which the roof rack bar is inserted, the horizontal frames having bolt holes formed through opening ends of the horizontal frames, the third coupling groove of the connection bracket and the bolt hole of the second binding bracket may be disposed to penetrate each other, and then a bolt and a nut may be coupled while penetrating the third coupling groove and the bolt hole, such that the connection bracket and the second binding bracket are fixedly coupled.

According to still another embodiment of the present invention, the contact-type vehicle roof box may further include: a third binding bracket including: a first coupling member including an upper horizontal frame having a shape corresponding to the horizontal-side body, a lower frame, and a connection frame, the first coupling member having a fourth coupling groove having a shape corresponding to the third coupling groove of the horizontal-side body of the connection bracket; and a door frame fitting member coupled to an outer surface of the connection frame of the first coupling member and configured to be fitted with a door frame of a vehicle door, in which the door frame fitting member is fitted with the door frame of the vehicle door, and a bolt and a nut are coupled while penetrating the third coupling groove and the fourth coupling groove, such that the connection bracket and the third binding bracket are fixedly coupled.

### [Advantageous Effects]

The contact-type vehicle roof box according to the embodiment of the present invention configured as described above may be mounted on the roof box while being in close contact with the vehicle roof panel regardless of the type of vehicle. Therefore, it is not necessary to develop different models in accordance with the type of vehicle, which makes it possible to reduce a large amount of cost. Further, the contact-type vehicle roof box may be installed on previous and changed vehicles, which makes it possible to reduce an economic loss and improve marketability.

### [Description of Drawings]

FIG. 1 is a view illustrating a state in which a contact-type vehicle roof box according to an embodiment of the present invention is mounted.
FIG. 2 is an exploded perspective view of the contact-type vehicle roof box according to the embodiment of the present invention.
FIG. 3 is a perspective view illustrating an elastic pad according to another embodiment of the contact-type vehicle roof box.
FIG. 4 is a view for explaining a structure for installing the contact-type vehicle roof box on a roof rail type vehicle.
FIG. 5 is a view for explaining a structure for installing the contact-type vehicle roof box on a roof rack type vehicle.
FIG. 6 is a view for explaining a structure for installing the contact-type vehicle roof box on a naked roof vehicle.

### [Best Mode]

Hereinafter, embodiments of the present invention will be described in detail with reference to the drawings. The following description is to assist in easily understanding the embodiments of the present invention but not intended to limit the protection scope.

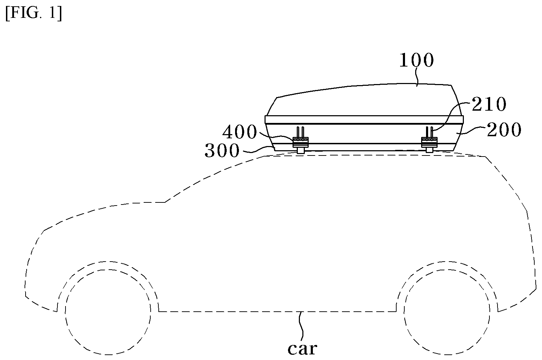

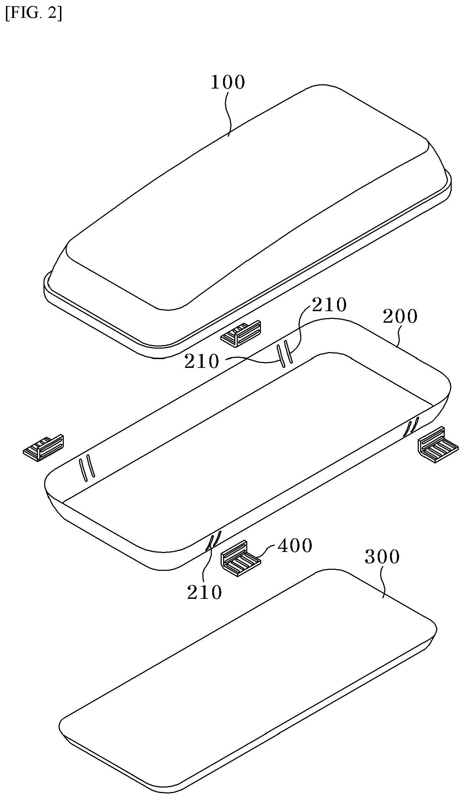

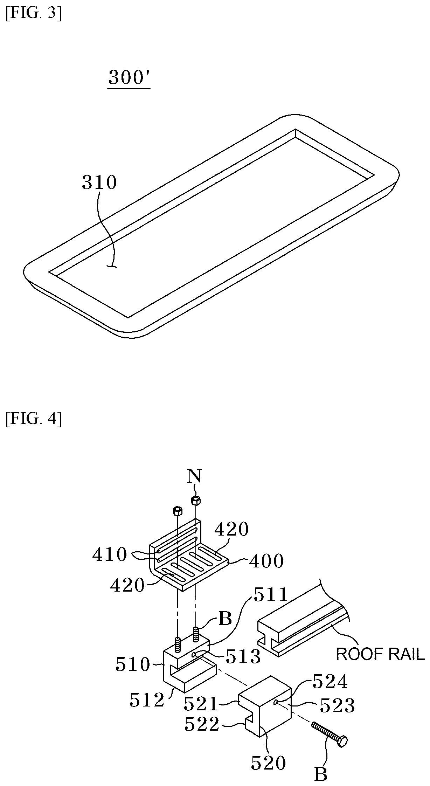

FIG. 1 is a view illustrating a state in which a contact-type vehicle roof box according to an embodiment of the present invention is mounted, FIG. 2 is an exploded perspective view of the contact-type vehicle roof box according to the embodiment of the present invention, and FIG. 3 is a perspective view illustrating an elastic pad according to another embodiment of the contact-type vehicle roof box.

As illustrated, a contact-type vehicle roof box according to an embodiment of the present invention is mounted on a roof panel of a vehicle. The vehicle has a roof rail or a roof rack basically mounted on a vehicle roof. Alternatively, the vehicle having a naked roof on which the roof rail or the roof rack is not mounted is released to the market. The contact-type vehicle roof box according to the embodiment of the present invention may be mounted on all of a roof rail type vehicle, a roof rack type vehicle, and a naked roof type vehicle without changing models.

The contact-type vehicle roof box according to the embodiment of the present invention includes: an elastic pad 300 configured to be seated on a roof panel of a vehicle; a roof box body 200 seated on the elastic pad 300 and having through-grooves 210 penetratively formed in a lateral surface of the roof box body 200 and vertically elongated; L-shaped connection brackets 400 coupled to the coupling grooves 210 to couple the roof box body 200 to the roof panel of the vehicle; and binding brackets 500, 600, and 700 configured to fix the connection brackets 400 to the roof panel of the vehicle.

The elastic pad 300 is provided in the form of an elastic member having a plate shape corresponding to a shape of a bottom of the roof box main body 200. A compressive sponge, synthetic resin, or a rubber material may be applied to the elastic pad 300. The elastic pad 300 may have a preset thickness so that the roof box is in close contact with the vehicle roof to disperse a load and define a close-contact shape. As illustrated in FIG. 3, the elastic pad 300 may have a through-hole 310 to reduce a weight.

The roof box includes the roof box body 200 and a cover 100. The pairs of coupling grooves 210 penetratively formed in two opposite surfaces of the roof box body 200 and disposed front and rear sides of the roof box. Two or more coupling grooves 210 extend in the vertical direction. The coupling groove 210 has a width corresponding to a diameter of a bolt rod.

The connection bracket 400 is configured as an L-shaped metal plate. Second and third coupling grooves 410 and 420 each having a width corresponding to the width of the first coupling groove 210 are formed in a vertical-side body 400v and a horizontal-side body 400h of the connection bracket 400. A plurality of second coupling grooves 410 is formed in the vertical-side body 400v and provided horizontally with respect to the horizontal-side body 400h. A plurality of third coupling grooves 420 is formed in the horizontal-side body 400h and provided vertically with respect to the vertical-side body 400v.

The contact-type vehicle roof box according to the embodiment of the present invention uses the binding brackets 500, 600, and 700, which are different in accordance with the type of vehicle roof. The binding brackets 500, 600, and 700 will be described with reference to FIGS. 4 to 6.

FIG. 4 is a view for explaining a structure for installing the contact-type vehicle roof box on the vehicle having the roof rail. The first binding bracket 500 couples the roof rail and the connection bracket 400. The first binding bracket 500 includes a pair of [-shaped bodies 510 and 520 that holds a rail head portion. That is, a [-shaped inner body 510 and an inverted [-shaped outer body 520 are coupled to each other while facing openings thereof. The [-shaped inner body 510 includes a first upper horizontal frame 511, a first lower horizontal frame 512, and a first vertical frame configured to connect an end of the first upper horizontal frame 511 and an end of the first lower horizontal frame 512. Bolt rods B each having a screw thread penetrate the first upper horizontal frame 511 upward and protrude upward. A first bolt hole 513 is formed through a surface of the first upper horizontal frame 511 that faces the outer body 520. The inverted [-shaped outer body 520 includes a second upper horizontal frame 521 and a second lower horizontal frame 522, which correspond to the inner body 510, and a second vertical frame configured to connect an end of the second upper horizontal frame 521 and an end of the second lower horizontal frame 522. A second bolt hole 523 is provided at an upper end of the second vertical frame, formed through the second upper horizontal frame 521, and disposed at a position corresponding to the first bolt hole 513.

A process of installing the contact-type vehicle roof box by using the first binding bracket 500 will be described below. When the [-shaped inner body 510 and the inverted [-shaped outer body 520 are coupled to each other while facing the openings thereof, the head of the roof rail engages with a space defined by first and second upper horizontal frames 511 and 521 facing each other, first and second lower horizontal frames 512 and 522 facing each other, and first and second vertical frames facing each other. A bolt B is bolt-coupled to the first through-hole 513 through the second through-hole 523. The bolt rods B formed to penetrate the first upper horizontal frame 511 upward are inserted into the third coupling grooves 420 formed in the horizontal-side body 400h of the connection bracket 400. Nuts N are coupled to the bolt rods B, such that the connection bracket 400 is fixed to the roof rail. The vertical-side body 400v of the connection bracket 400 is in contact with a position of the first coupling groove 210 formed in the lateral surface of the roof box body 200. The bolt and the nut are coupled while penetrating the second coupling groove 410 and the first coupling groove 210, such that the connection bracket 400 is coupled to the lateral surface of the roof box body 200.

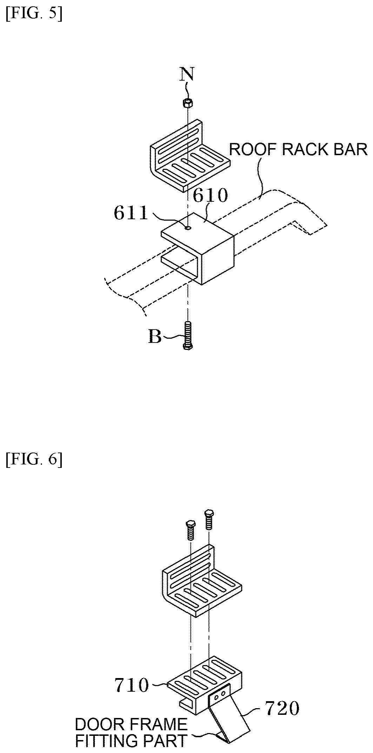

FIG. 5 is a view for explaining a structure for installing the contact-type vehicle roof box on the vehicle including the general roof rack. The second binding bracket 600 has a [ shape, and a roof rack bar is inserted between horizontal frames. Bolt holes 611 are formed through opening ends of the horizontal frames. A process of installing the contact-type vehicle roof box by using the second binding bracket 600 will be described below. The bolt and the nut are coupled while penetrating the second coupling groove 410 in the connection bracket 400 and the first coupling groove 210 formed in the lateral surface of the roof box body 200, such that the connection bracket 400 is coupled to the lateral surface of the roof box body 200. The second binding bracket 600 is fitted with the roof rack bar, the third coupling groove 420 of the connection bracket 400 and the bolt hole 611 of the second binding bracket 600 are disposed to penetrate each other, and then a bolt and a nut are coupled while penetrating the third coupling groove 420 and the bolt hole 611.

FIG. 6 is a view for explaining a structure for installing the contact-type vehicle roof box on the naked roof vehicle that does not have a roof carrier. The third binding bracket 700 includes: a first coupling member 710 including an upper horizontal frame having a shape corresponding to the horizontal-side body 400h, a lower frame, and a connection frame, the first coupling member 710 having fourth coupling grooves 711 each having a shape corresponding to the third coupling groove 420 of the horizontal-side body 400h of the connection bracket 400; and a door frame fitting member 720 coupled to an outer surface of the connection frame of the first coupling member 710 and configured to be fitted with a door frame of a vehicle door. The door frame fitting member 720 is fitted with the door frame of the vehicle door. Bolts and nuts are coupled while penetrating the third coupling groove 420 and the fourth coupling groove 711, such that the connection bracket 400 and the third binding bracket 700 are coupled.

According to the embodiment of the present invention described above, the roof box may be coupled to the roof panel while being in close contact with the roof panel by using the elastic pad 300 regardless of a roof curvature. Further, the first coupling groove 210 formed in the vertical direction in the lateral surface of the roof box may be coupled to the connection bracket 400 regardless of a height, and the binding brackets 500, 600, and 700, which correspond to the feet, may be applied and coupled in accordance with the type of roof. Therefore, it is not necessary to manufacture different models in accordance with the type of roof.

## Claims

1. A contact-type vehicle roof box, which is configured to be mounted on a roof of a vehicle, the roof box comprising:
an elastic pad (300) configured as a plate-shaped elastic member having a shape corresponding to a bottom of the roof box, the elastic pad (300) configured to be seated on an upper surface of a roof panel of the vehicle;
a roof box body (200) seated on the elastic pad (300) and having two or more coupling grooves (210) formed through two opposite surfaces of the roof box body (200) and extending in a vertical direction; and
L-shaped connection brackets (400) each having an L-shaped frame including a vertical-side body (400v) and a horizontal-side body (400h),
wherein a plurality of second coupling grooves (410) each having a width corresponding to a width of the first coupling groove (210) is formed in the vertical-side body (410v) and provided horizontally with respect to the horizontal-side body (410h), a plurality of third coupling grooves (420) is formed in the horizontal-side body (410h) and provided vertically with respect to the vertical-side body (400v), the vertical-side body (400v) is connected to a position of the coupling groove (210) of the roof box body (200), and the horizontal-side body (400h) is coupled to the roof of the vehicle.

2. The contact-type vehicle roof box of claim 1, wherein a roof rail is mounted on the roof of the vehicle,
wherein the contact-type vehicle roof box further comprises a first binding bracket (500) including a [-shaped inner body (510) and an inverted [-shaped outer body (520) that are coupled while facing openings thereof and holding a rail head portion of the roof rail, and
wherein the first binding bracket (500) and the horizontal-side body (400h) of the L-shaped connection bracket (400) are coupled by bolting (B).

3. The contact-type vehicle roof box of claim 2, wherein the [-shaped inner body (510) comprises:
a first upper horizontal frame (511);
a first lower horizontal frame (512); and
a first vertical frame configured to connect an end of the first upper horizontal frame (511) and an end of the first lower horizontal frame (512),
wherein a bolt rod B having a screw thread penetrates the first upper horizontal frame (511) upward and protrudes upward,
wherein a first bolt hole (513) is formed through a surface of the first upper horizontal (511) that faces the outer body (520),
wherein the inverted [-shaped outer body (520) comprises:
a second upper horizontal frame (521) and a second lower horizontal frame (522) corresponding to the [-shaped inner body (510); and
a second vertical frame configured to connect an end of the second upper horizontal frame (521) and an end of the second lower horizontal frame (522),
wherein a second bolt hole (524) is disposed at an upper end of the second vertical frame, formed through the second upper horizontal frame (521), and provided at a position corresponding to the first bolt hole (513), and
wherein the bolt rod B of the [-shaped inner body (510) is inserted into and bolt-coupled to the third coupling groove (420) of the horizontal-side body (400h), such that the first binding bracket (500) and the connection bracket (400) fixedly coupled.

4. The contact-type vehicle roof box of claim 1, wherein a roof rack bar is mounted on the roof of the vehicle,
wherein the contact-type vehicle roof box further comprises a second binding bracket (600) having a [ shape and including horizontal frames between which the roof rack bar is inserted, the horizontal frames having bolt holes (611) formed through opening ends of the horizontal frames, and
wherein the third coupling groove (420) of the connection bracket (400) and the bolt hole (611) of the second binding bracket (600) are disposed to penetrate each other, and then a bolt (B) and a nut (N) are coupled while penetrating the third coupling groove (420) and the bolt hole (611), such that the connection bracket (400) and the second binding bracket (600) are fixedly coupled.

5. The contact-type vehicle roof box of claim 1, further comprising:
a third binding bracket (700) comprising:
a first coupling member (710) including an upper horizontal frame having a shape corresponding to the horizontal-side body (400h), a lower frame, and a connection frame, the first coupling member (710) having a fourth coupling groove (711) having a shape corresponding to the third coupling groove (420) of the horizontal-side body (400h) of the connection bracket (400); and
a door frame fitting member (720) coupled to an outer surface of the connection frame of the first coupling member (710) and configured to be fitted with a door frame of a vehicle door,
wherein the door frame fitting member (720) is fitted with the door frame of the vehicle door, and a bolt and a nut are coupled while penetrating the third coupling groove (420) and the fourth coupling groove (711), such that the connection bracket (400) and the third binding bracket (700) are fixedly coupled.

## Patentansprüche

1. Fahrzeug-Dachbox vom Kontakttyp, welche dazu eingerichtet ist, an einem Dach eines Fahrzeugs angebracht zu sein, wobei die Dachbox umfasst:
ein elastisches Pad (300), welches als ein plattenförmiges elastisches Element eingerichtet ist, welches eine Form aufweist, welche einer Unterseite der Dachbox entspricht, wobei das elastische Pad (300) dazu eingerichtet ist, an einer oberen Fläche einer Dachverkleidung des Fahrzeugs zu sitzen;
einen Dachbox-Körper (200), welcher auf dem elastischen Pad (300) sitzt und zwei oder mehr Kopplungsnuten (210) aufweist, welche durch zwei entgegengesetzte Flächen des Dachbox-Körpers (200) ausgebildet sind und sich in einer vertikalen Richtung erstrecken; und
L-förmige Verbindungshalterungen (400), welch jeweils einen L-förmigen Rahmen aufweisen, welcher einen vertikalseitigen Körper (400v) und einen horizontalseitigen Körper (400h) umfasst,
wobei eine Mehrzahl von zweiten Kopplungsnuten (410), welche jeweils eine Breite aufweisen, welche einer Breite der ersten Kopplungsnut (210) entspricht, in dem vertikalseitigen Körper (410v) ausgebildet ist und horizontal in Bezug auf den horizontalseitigen Körper (410h) bereitgestellt ist, eine Mehrzahl von dritten Kopplungsnuten (420) in dem horizontalseitigen Körper (410h) ausgebildet ist und vertikal in Bezug auf den vertikalseitigen Körper (400v) bereitgestellt ist, wobei der vertikalseitige Körper (400v) mit einer Position der Kopplungsnut (210) des Dachbox-Körpers (200) verbunden ist und der horizontalseitige Körper (400h) mit dem Dach des Fahrzeugs gekoppelt ist.

2. Fahrzeug-Dachbox vom Kontakttyp nach Anspruch 1, wobei eine Dachschiene an dem Dach des Fahrzeugs angebracht ist,
wobei die Fahrzeug-Dachbox vom Kontakttyp ferner eine erste Bindungshalterung (500) umfasst, welche einen [-förmigen inneren Körper (510) und einen invertierten [-förmigen äußeren Körper (520) umfasst, welche gekoppelt sind, während sie Öffnungen davon zugewandt sind und einen Schienenkopfabschnitt der Dachschiene halten, und
wobei die erste Bindungshalterung (500) und der horizontalseitige Körper (400h) der L-förmige Verbindungshalterung (400) durch ein Verschrauben (B) gekoppelt sind.

3. Fahrzeug-Dachbox vom Kontakttyp nach Anspruch 2, wobei der [-förmige innere Körper (510) umfasst:
einen ersten oberen horizontalen Rahmen (511);
einen ersten unteren horizontalen Rahmen (512); und
einen ersten vertikalen Rahmen, welcher dazu eingerichtet ist, ein Ende des ersten oberen horizontalen Rahmens (511) und ein Ende des ersten unteren horizontalen Rahmens (512) zu verbinden,
wobei eine Pleuelschraube B, welche ein Schraubgewinde aufweist, den ersten oberen horizontalen Rahmen (511) nach oben durchdringt und nach oben vorsteht,
wobei ein erstes Schraubenloch (513) durch eine Fläche der ersten oberen Horizontalen (511) ausgebildet ist, welche dem äußeren Körper (520) zugewandt ist,
wobei der invertierte [-förmige äußere Körper (520) umfasst:
einen zweiten oberen horizontalen Rahmen (521) und einen zweiten unteren horizontalen Rahmen (522), welcher dem [-förmigen inneren Körper (510) entspricht; und
einen zweiten vertikalen Rahmen, welcher dazu eingerichtet ist, ein Ende des zweiten oberen horizontalen Rahmens (521) und ein Ende des zweiten unteren horizontalen Rahmens (522) zu verbinden,
wobei ein zweites Schraubenloch (524) an einem oberen Ende des zweiten vertikalen Rahmens angeordnet ist, welches durch den zweiten oberen horizontalen Rahmen (521) ausgebildet ist, und an einer Position bereitgestellt ist, welche dem ersten Schraubenloch (513) entspricht, und
wobei die Pleuelschraube B des [-förmigen inneren Körpers (510) in die dritte Kopplungsnut (420) des horizontalseitigen Körpers (400h) eingeführt und damit verschraubt ist, sodass die erste Bindungshalterung (500) und die Verbindungshalterung (400) befestigt gekoppelt sind.

4. Fahrzeug-Dachbox vom Kontakttyp nach Anspruch 1, wobei eine Dachträgerstange an dem Dach des Fahrzeugs angebracht ist,
wobei die Fahrzeug-Dachbox vom Kontakttyp ferner eine zweite Bindungshalterung (600) umfasst, welche eine [ Form aufweist und horizontale Rahmen umfasst, zwischen welchen die Dachträgerstange eingeführt ist, wobei die horizontalen Rahmen Schraubenlöcher (611) aufweisen, welche durch Öffnungsenden der horizontalen Rahmen ausgebildet sind, und
wobei die dritte Kopplungsnut (420) der Verbindungshalterung (400) und das Schraubenloch (611) der zweiten Bindungshalterung (600) angeordnet sind, um einander zu durchdringen, und dann eine Schraube (B) und eine Mutter (N) während eines Durchdringens der dritten Kopplungsnut (420) und des Schraubenlochs (611) gekoppelt sind, sodass die Verbindungshalterung (400) und die zweite Bindungshalterung (600) befestigt gekoppelt sind.

5. Fahrzeug-Dachbox vom Kontakttyp nach Anspruch 1, ferner umfassend:
eine dritte Bindungshalterung (700), umfassend:
ein erstes Kopplungselement (710), welches einen oberen horizontalen Rahmen, welcher eine Form aufweist, welche dem horizontalseitigen Körper (400h) entspricht, einen unteren Rahmen und einen Verbindungsrahmen umfasst, wobei das erste Kopplungselement (710) eine vierte Kopplungsnut (711) aufweist, welche eine Form aufweist, welche der dritten Kopplungsnut (420) des horizontalseitigen Körpers (400h) der Verbindungshalterung (400) entspricht; und
ein Türrahmen-Anschlusselement (720), welches mit einer äußeren Fläche des Verbindungsrahmens des ersten Kopplungselements (710) gekoppelt ist und dazu eingerichtet ist, mit einem Türrahmen einer Fahrzeugtür angeschlossen zu sein,
wobei das Türrahmen-Anschlusselement (720) mit dem Türrahmen der Fahrzeugtür angeschlossen ist und eine Schraube und eine Mutter während eines Durchdringens der dritten Kopplungsnut (420) und der vierten Kopplungsnut (711) gekoppelt sind, sodass die Verbindungshalterung (400) und die dritte Bindungshalterung (700) befestigt gekoppelt sind.

## Revendications

1. Coffre de toit de véhicule de type à contact, configuré pour être monté sur le toit d'un véhicule, le coffre de toit comprenant :
un coussin élastique (300) configuré comme un élément élastique en forme de plaque ayant une forme correspondant au fond du coffre de toit, le coussin élastique (300) étant configuré pour être placé sur une surface supérieure d'un panneau de toit du véhicule ;
un corps de coffre de toit (200) reposant sur le coussin élastique (300) et ayant deux ou plusieurs rainures d'accouplement (210) formées à travers deux surfaces opposées du corps de coffre de toit (200) et s'étendant dans le sens vertical ; et
des supports de connexion en forme de L (400) ayant chacun un cadre en forme de L comprenant un corps de côté vertical (400v) et un corps de côté horizontal (400h),
dans lequel une pluralité de deuxièmes rainures d'accouplement (410) ayant chacune une largeur correspondant à la largeur de la première rainure d'accouplement (210) est formée dans le corps de côté vertical (410v) et horizontalement par rapport au corps de côté horizontal (410h), une pluralité de troisièmes rainures de couplage (420) est formée horizontalement dans le corps de côté horizontal (410h) et verticalement par rapport au corps de côté vertical (400v), le corps de côté vertical (400v) est relié à une position de la rainure de couplage (210) du corps du coffre de toit (200), et le corps de côté horizontal (400h) est couplé au toit du véhicule.

2. Coffre de toit de véhicule de type à contact selon la revendication 1, dans lequel un rail de toit est monté sur le toit du véhicule,
dans lequel le coffre de toit de véhicule de type à contact comprend en outre un premier support de fixation (500) comprenant un corps intérieur en forme de [ (510) et un corps extérieur en forme de [ inversé (520) qui sont couplés tout en faisant face à leurs ouvertures et en maintenant une partie de tête du rail de toit, et
dans lequel le premier support de fixation (500) et le corps de côté horizontal (400h) du support de connexion en forme de L (400) sont couplés par boulonnage (B).

3. Coffre de toit de véhicule de type à contact selon la revendication 2, dans lequel le corps intérieur en forme de [ (510) comprend :
un premier cadre horizontal supérieur (511) ;
un premier cadre horizontal inférieur (512) ; et
un premier cadre vertical configuré pour relier une extrémité du premier cadre horizontal supérieur (511) et une extrémité du premier cadre horizontal inférieur (512),
dans lequel une tige de boulon B dotée d'un pas de vis pénètre le premier cadre horizontal supérieur (511) vers le haut et fait saillie vers le haut,
dans lequel un premier trou de boulon (513) est formé à travers une surface du premier cadre horizontal supérieur (511) qui fait face au corps extérieur (520),
dans lequel le corps extérieur en forme de [ inversé (520) comprend :
un deuxième cadre horizontal supérieur (521) et un deuxième cadre horizontal inférieur (522) correspondant au corps intérieur en forme de [ (510) ; et
un deuxième cadre vertical configuré pour relier une extrémité du deuxième cadre horizontal supérieur (521) et une extrémité du deuxième cadre horizontal inférieur (522),
dans lequel un deuxième trou de boulon (524) est disposé à une extrémité supérieure du deuxième cadre vertical, formé à travers le deuxième cadre horizontal supérieur (521), et prévu à une position correspondant au premier trou de boulon (513), et
dans lequel la tige de boulon B du corps intérieur en forme de [ (510) est insérée dans la troisième rainure d'accouplement (420) du corps de côté horizontal (400h) et y est accouplée, de sorte que le premier support de fixation (500) et le support de connexion (400) sont accouplés de manière fixe.

4. Coffre de toit de véhicule de type à contact selon la revendication 1, dans lequel une barre de toit est montée sur le toit du véhicule,
dans lequel le coffre de toit de véhicule de type à contact comprend en outre un deuxième support de fixation (600) ayant une forme de [ et comprenant des cadres horizontaux entre lesquels la barre de toit est insérée, les cadres horizontaux ayant des trous de boulon (611) formés à travers des extrémités d'ouverture des cadres horizontaux, et
dans lequel la troisième rainure de couplage (420) du support de connexion (400) et le trou de boulon (611) du deuxième support de fixation (600) sont disposés de manière à pénétrer l'un dans l'autre, et un boulon (B) et un écrou (N) sont couplés tout en pénétrant dans la troisième rainure de couplage (420) et le trou de boulon (611), de sorte que le support de connexion (400) et le deuxième support de fixation (600) sont accouplés de manière fixe.

5. Coffre de toit de véhicule de type à contact selon la revendication 1, comprenant en outre :
un troisième support de fixation (700) comprenant :
un premier élément d'accouplement (710) comprenant un cadre horizontal supérieur ayant une forme correspondant au corps de côté horizontal (400h), un cadre inférieur et un cadre de connexion, le premier élément de couplage (710) ayant une quatrième rainure de couplage (711) ayant une forme correspondant à la troisième rainure de couplage (420) du corps de côté horizontal (400h) de le support de connexion (400) ; et
un élément d'adaptation de cadre de porte (720) couplé à une surface extérieure du cadre de connexion du premier élément de couplage (710) et configuré pour s'adapter au cadre de porte d'une porte de véhicule,
dans lequel l'élément d'adaptation de cadre de porte (720) est fixé au cadre de la porte de l'appareil porte du véhicule, et un boulon et un écrou sont accouplés tout en pénétrant dans la troisième rainure d'accouplement (420) et la quatrième rainure d'accouplement (711), de sorte que le support de connexion (400) et le troisième support de fixation (700) sont accouplés de manière fixe.
